# EUROPÄISCHE PATENTANMELDUNG

(11) **EP 0 761 503 A1**
(43) Veröffentlichungstag der Anmeldung: **12.03.1997**
(21) Anmeldenummer: 96103258.8
(22) Anmeldetag: 02.03.1996
(51) Int. Cl.: B60R 7/02

(54) **Ablagefach**

(30) Priorität: 07.09.1995 DE 29514388 U
(71) Anmelder: Buchhalter, Thomas, 53859 Niederkassel (DE)
(72) Erfinder: Buchhalter, Thomas, 53859 Niederkassel (DE)
(74) Vertreter: Dallmeyer, Georg, Dipl.-Ing.

(57) **Zusammenfassung**

Bei einem Ablagefach aus einem schalenförmigen Behälter (1) für Personenkraftfahrzeuge mit einem mittels einer Heckklappe (2) verschließbaren Kofferraum (4) und einer vorzugsweise mit der Heckklappe (2) verschwenkbaren Hutablage (6), die auf seitlichen horizontalen Auflageflächen (8) des Kofferraums (4) im Schließzustand der Heckklappe (2) aufliegt, ist vorgesehen, daß an den seitlichen Oberkanten (3) des Behälters (1) dünne, im wesentlichen horizontale Flansche von dem Behälter (1) seitlich abstehen, daß die seitlichen Flansche (10) der Kontur der Auflagefläche (8) für die Hutablage (6) angepaßt sind, und daß der Behälter (1) zwischen Hutablage (6) und Auflagefläche (8) für die Hutablage (6) einsetzbar ist.

## Beschreibung

Die Erfindung betrifft ein Ablagefach aus einem schalenförmigen Behälter für Personenkraftfahrzeuge nach dem Oberbegriff des Anspruchs 1.

Derartige Ablagefächer dienen dazu, ansonsten lose im Kofferraum herumliegende Gegenstände aufzunehmen und die klapperfreie Unterbringung beispielsweise von Verbandskasten und Warndreieck zu ermöglichen.

Bekannt ist es nach der EP 0 556 100 A einen schalenförmigen Behälter schubladenartig in einen Zwischenboden einzuschieben, der schwenkbar an einem Kofferraumdeckel angelenkt ist. Nachteilig ist dabei, daß der Zugang zu dem schalenförmigen Behälter nur durch Herausziehen des Behälters ermöglicht wird.

Weiterhin ist nachteilig, daß der Zwischenboden bei geöffnetem Kofferraumdeckel schräg nach oben weist, so daß der schubladenförmige Behälter entgegen der Schwerkraft herausgezogen werden muß.

Der Erfindung liegt die Aufgabe zugrunde, ein Ablagefach der eingangs genannten Art zu schaffen, das bei Fahrzeugen mit Heckklappe ohne Montageaufwand verwendbar ist und das die genannten Nachteile nicht aufweist.

Zur Lösung dieser Aufgabe dienen die Merkmale des Anspruchs 1.

Die Erfindung sieht in vorteilhafter Weise vor, daß an den seitlichen Oberkanten des Behälters dünne, im wesentlichen horizontale Flansche von dem Behälter seitlich abstehen. Die seitlichen Flansche sind dabei der Kontur der Auflagefläche für die Hutablage angepaßt. Der Behälter ist ohne Montageaufwand zwischen Hutablage und Auflagefläche für die Hutablage einsetzbar, wobei die Hutablage im Schließzustand der Heckklappe in vorteilhafter Weise den schalenförmigen Behälter abdeckt. Beim Öffnen der Heckklappe wird die Hutablage mit nach oben verschwenkt, so daß der auf der Auflagefläche für die Hutablage aufliegende Behälter frei zugänglich ist. Falls der Behälter zeitweise nicht benötigt wird, kann er auch in einfacher Weise entnommen werden. Die der Kontur der Auflagefläche angepaßten Flansche erlauben eine Anpassung an unterschiedliche Fahrzeugtypen. Die Flansche sind dünn gestaltet, so daß sie im Rahmen der üblichen Toleranzen zwischen Hutablage und Auflagefläche für die Hutablage problemlos eingefügt werden können.

Die oberen Längskanten des Behälters weisen ein verstärkendes Profil auf. Ein solches Profil besteht vorzugsweise aus einem im Querschnitt U-förmigen nach unten offenen Profil, kann aber auch aus einem geschlossenen Hohlprofil bestehen.

Die Flansche weisen an mindestens einer zu den oberen Längskanten parallelen Stirnseite einen vertikalen Abschnitt auf, der mit dem Verstärkungsprofii der Längskanten verbunden ist. Die Flansche werden mit Hilfe der vertikalen Abschnitte versteift und ermöglichen damit eine hohe Tragfähigkeit des Behälters.

Der Behälter kann in vorteilhafter Weise herausnehmbare Trennwände aufnehmen, um Fachunterteilungen zu bilden. Es ist dadurch möglich, Gegenstände geordnet und klapperfrei in dem Behälter unterzubringen. Die Fachunterteilungen können dabei an genormte Gegenstände wie Verbandskästen und Warndreiecke angepaßt sein.

Der Boden des Behälters kann mit zu den Längskanten parallelen Profilierungen versehen sein. Diese Profilierungen dienen zur Versteifung des Behälters in Längsrichtung und erhöhen die Bodenstabilität.

Dabei können auch die den Flanschen zugewandten Seitenwände in Verlängerung der Profilierung des Bodens verlaufende Profilierungen aufweisen, die bei hoher gewichtsmäßiger Belastung des Behälters ein Einknicken der Seitenwände verhindern.

Die Innen- und/oder Außenflächen des Behälters können mit einer textilen Beschichtung, z.B. einer Beflockung, versehen sein.

An der der Heckklappe zugewandten Längskante des Behälters können mindestens zwei Schlaufen angeordnet sein, die längliche Gegenstände, z.B. einen Schirm, aufnehmen können. Die Schlaufen können dabei ein Klettbandverschluß aufweisen, wodurch die Schlaufenweite einstellbar ist.

Die Dicke der Flansche beträgt 1 bis 5 mm vorzugsweise ca. 2 bis 4 mm. Solche Flansche lassen sich zwischen Hutablage und Auflagefläche für die Hutablage einsetzen, ohne daß irgendwelche Veränderungen an dem Fahrzeug vorgenommen werden müssen.

Die oberen Längskanten des Behälters können tiefer verlaufen als die Flansche. Eine solche Konstruktion erhöht die Stabilität des Behälters.

Der Behälter kann an die Hutablage ankoppelbar sein und ist dann mit der Hutablage gemeinsam verschwenkbar. Dabei kann der Behälter mit winkelmäßigen Abstand von der Hutablage verschwenkbar sein, so daß der Inhalt auch bei Verschwenken des Behältes direkt zugänglich ist. Beim Verschwenken des Behälters stützt sich dieser an seiner dem Fahrzeuginnenraum zugewandten Längskante auf den Auflageflächen auf.

Alternativ kann vorgesehen sein, daß der Behälter mit einem Befestigungsmittel, z.B. einem Klettband, an der Hutablage oder an der Auflagefläche für die Hutablage arretierbar ist.

Die seitlichen Flansche können auf der der Heckklappe zugewandten Seite verbreitert sein. Bei einer sich erweiternden Profilierung der Auflagefläche und einer dieser Erweiterung entsprechenden Verbreiterung der Flansche ist die Lage des Behälters auf den Auflageflächen fixiert.

Es kann auch vorgesehen sein, daß der Behälter mittels Aussparungen und/oder Vorsprüngen mit der Hutablage zwecks Arretierung verhakt ist.

Der vertikale Abschnitt der Flansche geht vorzugsweise bündig in die Vorderkante eines im Querschnitt U-förmigen Verstärkungsprofils über und schließt mit diesem bündig ab. Die Längskanten und die Flansche haben damit eine gemeinsame vertikale Vorderkante, die einen einheitlichen Abschluß des Behälters an seinen Längskanten schafft.

Im folgenden wird unter Bezugnahme auf die Zeichnungen ein Ausführungsbeispiel der Erfindung näher erläutert.

Es zeigen:
- Fig. 1: eine perspektivische Ansicht des Behälters,
- Fig. 2: eine perspektivische Ansicht des Behälters im Einbauzustand, und
- Fig. 3: eine Draufsicht auf den Behälter.

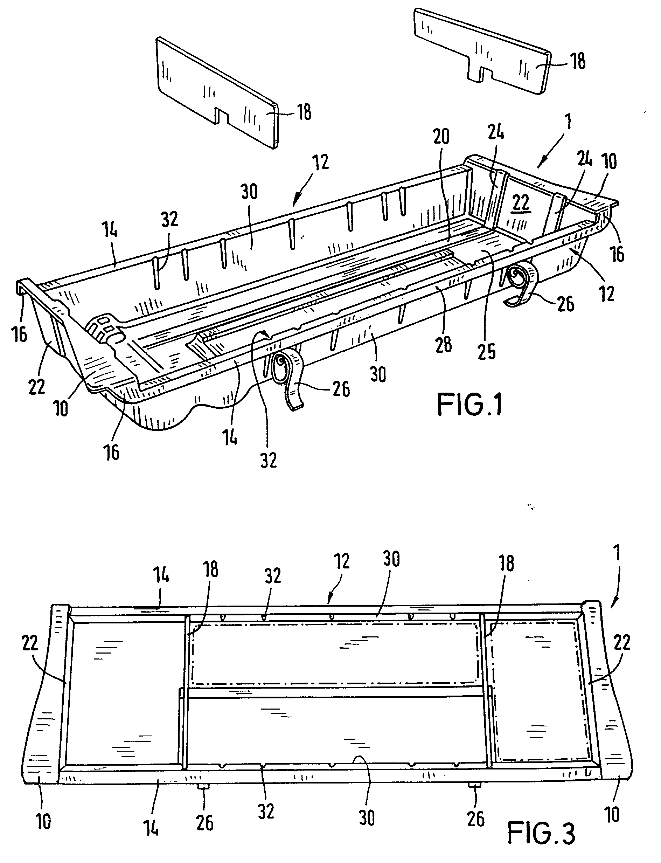

Das in Fig. 1 dargestellte Ablagefach besteht aus einem schalenförmigen Behälter 1, vorzugsweise aus ABS-Material, das mit Textilmaterial beschichtet, z.B. beflockt sein kann.

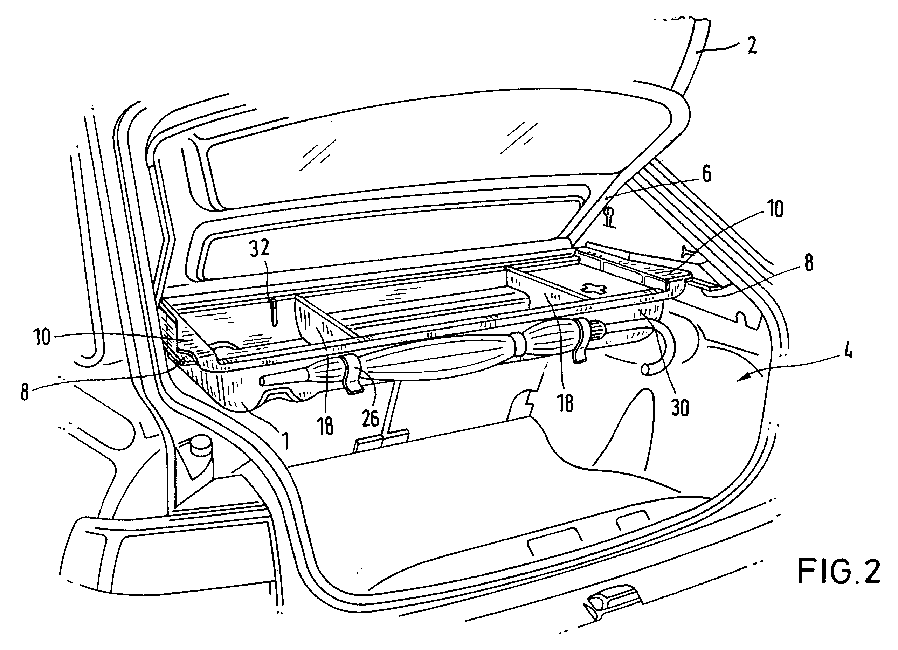

Fig. 2 zeigt den Behälter 1 im Einbauzustand oberhalb eines Kofferraums 4 eines mit einer Heckklappe 2 versehenen Fahrzeugs. Das Fahrzeug weist im oberen Bereich des Kofferraums 4 Auflageflächen 8 für die Hutablage 6 auf.

Der Behälter 1 ist mit seitlichen dünnen Flanschen 10 versehen, die in Draufsicht der Kontur der Auflageflächen in Draufsicht entsprechen und die damit ein Aufsetzen des Behälters 1 auf die Auflageflächen 8 ermöglichen. Dabei sind die horizontal von dem Behälter 1 abstehenden Flansche 10 so dünn gestaltet, daß sie im Schließzustand der Heckklappe 2 das Auflegen der Hutablage 6 auf den Flanschen 10 anstelle auf den Auflageflächen 8 störungsfrei ermöglichen. Die Dicke der Flansche ist jedenfalls dünner als der üblicherweise vorgesehene Toleranzbereich zwischen Hutablage 6 und Auflagefläche 8. Für die Flansche 10 genügt die Materialstärke des Behältermaterials, um gleichwohl eine hohe Tragfähigkeit des Behälters 1 sicherzustellen.

Hierzu weist der Behälter 1 an mehreren Stellen Verstärkungs- und Versteifungsprofile auf. So ist der Boden 25 des Behälters 1 mit Profilierungen 20 versehen, die parallel zu den oberen Längskanten 12 des Behälters verlaufen und die den Boden versteifen. Die Profilierungen 20 können auf den Seitenwänden 22 des Behälters 1 in Form von Profilierungen 24 fortgesetzt sein. Die oberen Längskanten 12 sind mit im Querschnitt U-förmigen Profil nach außen umgebogen und geben dem Behälter eine höhere Steifigkeit gegen Durchbiegung und Verwindung. Die flachen und horizontalen Flansche 10 gehen an den Vorder- und Hinterkanten des Behälters 1 mit einem vertikalen Abschnitt 16 in die Vorderkante 28 der Längskanten 12 über, wobei die vertikalen Abschnitte 16, den Flanschen 10 eine hohe Stabilität und Tragfähigkeit verleihen.

Die Flansche 10 können in Draufsicht eine unterschiedliche Profilierung aufweisen und dienen der Anpassung an unterschiedlich gestalteter Auflageflächen unterschiedlicher Fahrzeuge.

Der Boden 25 kann für die Aufnahme spezieller Gegenstände z.B. Warndreieck oder Verbandskasten unterschiedlich hoch verlaufen, um bestimmte vertiefte Fächer zu bilden. Des weiteren können in den in Längsrichtung verlaufenden Seitenwänden 30 gegenüberliegende Einkerbungen 32 vorgesehen sein, die das Einsetzen von Trennwänden 18 zulassen. Die Trennwände 18 können in ihrer dem Boden 25 zugewandten Unterseite der Bodenprofilform angepaßt sein.

An der Vorderkante 28 der Längskanten 12 oder an der der Heckklappe 2 zugewandten Seitenwand 30 können Schlaufen 26 zur Befestigung von länglichen Gegenständen vorgesehen sein. Die Schlaufen 26, sind mit Klettverschlüssen versehen, so daß die Schlaufenweite an die zu haltenden Gegenstände angepaßt werden kann. Wie aus Fig. 2 ersichtlich, sind die Schlaufen 26 besonders geeignet, einen Schirm aufzunehmen.

Die Stabilität des Behälters 1 wird insbesondere durch die an beiden Längskanten 12 im Querschnitt U-förmigen Versträkungsprofilen 14 erreicht, deren äußere Vorderkante 28 an den Seiten bündig in die vertikalen Abschnitte 16 übergeht, die die vertikale Vorderkante 28 mit den horizontalen Flanschen 10 verbindet. Die Flansche 10 bilden somit gemeinsam mit den vertikalen Abschnitten 16 und den entlang der Längskanten 12 vorgesehenen Verstärkungsprofilen 14 einen starren und im hohen Maße tragfähigen Rahmen für die Behälterschale.

## Patentansprüche

1. Ablagefach aus einem schalenförmigen Behälter (1) für Personenkraftfahrzeuge mit einem mittels einer Heckklappe (2) verschließbaren Kofferraum (4) und einer vorzugsweise mit der Heckklappe (2) verschwenkbaren Hutablage (6), die auf seitlichen horizontalen Auflageflächen (8) des Kofferraums (4) im Schließzustand der Heckklappe (2) aufliegt,
**dadurch gekennzeichnet**,
- daß an den seitlichen Oberkanten (3) des Behälters (1) dünne, im wesentlichen horizontale Flansche von dem Behälter (1) seitlich abstehen,
- daß die seitlichen Flansche (10) der Kontur der Auflagefläche (8) für die Hutablage (6) angepaßt sind, und
- daß der Behälter (1) zwischen Hutablage (6) und Auflagefläche (8) für die Hutablage (6) einsetzbar ist.

2. Ablagefach nach Anspruch 1, dadurch gekennzeichnet, daß die oberen Längskanten (12) des Behälters (1) ein verstärkendes Profil (14) aufweisen.

3. Ablagefach nach Anspruch 1 oder 2, dadurch gekennzeichnet, daß die Flansche (10) an mindestens einer zu den oberen Längskanten (12) parallelen Stirnseite einen vertikalen Abschnitt (16) aufweisen, der mit dem Verstärkungsprofil (14) der Längskanten (12) verbunden ist.

4. Ablagefach nach einem der Ansprüche 1 bis 3, dadurch gekennzeichnet, daß der Behälter (1) Fachunterteilungen mit herausnehmbaren Tennwänden (18) aufweist.

5. Ablagefach nach einem der Ansprüche 1 bis 4, dadurch gekennzeichnet, daß der Boden (25) des Behälters (1) mit zu den Längskanten (12) parallelen Profilierungen (20) versehen ist.

6. Ablagefach nach einem der Ansprüche 1 bis 5, dadurch gekennzeichnet, daß die den Flanschen (10) zugewandten Seitenwände in Verlängerung der Profilierungen (20) des Bodens (25) verlaufende Profilierungen (24) aufweisen.

7. Ablagefach nach einem der Ansprüche 1 bis 6, dadurch gekennzeichnet, daß die Innen- und/oder Außenflächen des Behälters (1) mit einer textilen Beschichtung, z.B. Beflockung, versehen sind.

8. Ablagefach nach einem der Ansprüche 1 bis 7, dadurch gekennzeichnet, daß auf der der Heckklappe (2) zugewandten Längskante (12) des Behälters (1) mindestens zwei Schlaufen (26) angeordnet sind.

9. Ablagefach nach einem der Ansprüche 1 bis 8, dadurch gekennzeichnet, daß die Dicke der Flansche (10) ca. 1 bis 5 mm, vorzugsweise 2 bis 4 mm, beträgt.

10. Ablagefach nach einem der Ansprüche 1 bis 9, dadurch gekennzeichnet, daß die oberen Längskanten (12) des Behälters (1) tiefer verlaufen, als die Flansche (10).

11. Ablagefach nach einem der Ansprüche 1 bis 10, dadurch gekennzeichnet, daß der Behälter (1) an die Hutablage (6) ankoppelbar und gemeinsam mit der Hutablage verschwenkbar ist.

12. Ablagefach nach einem der Ansprüche 1 bis 10, dadurch gekennzeichnet, daß der Behälter (1) mit einem Befestigungsmittel, z.B. einem Klettband, an der Hutablage (6) oder auf der Auflagefläche (8) für die Hutablage (6) arretierbar ist.

13. Ablagefach nach einem der Ansprüche 1 bis 12, dadurch gekennzeichnet, daß die seitlichen Flansche (10) auf der der Heckklappe (2) zugewandten Seite verbreitert sind.

14. Ablagefach nach einem der Ansprüche 1 oder 2, dadurch gekennzeichnet, daß der Behälter (1) mittels Aussparungen und/oder Vorsprüngen mit der Hutablage (6) zwecks Arretierung verhakt ist.

15. Ablagefach nach einem der Ansprüche 3 bis 14, dadurch gekennzeichnet, daß der vertikale Abschnitt (16) der Flansche (10) bündig mit der Vorderkante (28) eines im Querschnitt U-förmigen Verstärkungsprofil (14) abschließt und in diese Vorderkante (28) übergeht.
